# FASCICULE DE BREVET EUROPEEN

(11) **EP 2 525 247 B1**
(45) Date de publication et mention de la délivrance du brevet: **28.02.2024**
(21) Numéro de dépôt: 12168311.4
(22) Date de dépôt: 16.05.2012
(51) Int. Cl.: G02C 5/22, G02C 5/00

(54) **Monture de lunettes à articulation**
Brillengestell mit Gelenk
Spectacle frame with joint

(30) Priorité: 16.05.2011 FR 1154247
(43) Date de publication de la demande: 21.11.2012
(73) Titulaire: Minima, 91310 Linas (FR)
(72) Inventeur: Zoonens, Charles, 28260 Rouvres (FR)
(74) Mandataire: Cabinet Boettcher

(56) Documents cités:
- EP-A1- 1 146 380
- WO-A1-98/19203
- WO-A1-99/14628
- WO-A1-99/42890
- WO-A1-02/088827
- GB-A- 2 281 979

## Description

La présente invention concerne une monture de lunettes, telles que des lunettes correctrices et des lunettes de protection par exemple solaire.

Une paire de lunettes comprend généralement deux lentilles, communément appelés verres, reçus dans une partie frontale de la monture à laquelle des branches sont reliées par des charnières. La partie frontale comprend généralement un pontet central reliant les deux verres l'un à l'autre et des tenons latéraux reliant chacun une charnière à un des verres.

Dans certaines montures, la partie frontale comprend des cerclages entourant chacun un verre. Les cerclages sont reliés entre eux par le pontet et sont reliés chacun à une charnière d'une branche par un tenon.

Il est également connu des montures extrêmement fines et légères dans lesquelles la partie frontale est constituée d'un pontet fixé directement aux verres et des tenons fixées chacun directement sur un des verres.

Certaines montures sont réalisées à partir de pièces métalliques tordues.

La réalisation des charnières dans les montures fines est très délicate du fait du peu de matière qui est présent à l'extrémité des tenons et à l'extrémité des branches et qui empêche l'usinage de tout ou partie de la charnière à ces extrémités.

Les charnières sont donc généralement rapportées sur les extrémités des tenons et des branches par soudage ou brasage.

La petite taille des pièces rend la charnière et l'opération de soudage coûteuses. L'opération de soudage est en outre délicate et peut entraîner la nécessité d'un traitement de finition supplémentaire pour donner à la monture son aspect définitif.

Dans certaines montures, dites filaires, les pièces métalliques sont des fils, ce qui rend la réalisation des charnières encore plus délicate et coûteuse.

Le document WO 98/19203 A1 divulgue une monture de lunette comprenant un tenon et une branche reliés par un corps d'articulation définissant un axe de pivotement. Le tenon est réalisé en boucle presque fermée et la branche en boucle ouverte et le corps d'articulation comporte trois gorges annulaires coaxiales à l'axe de pivotement. Lors de l'assemblage, la boucle de la branche est positionné entre la boucle du tenon et le corps d'articulation est pressé suivant l'axe de pivotement jusqu'à ce que chacune des boucles s'engage dans une gorge du corps d'articulation.

Le document WO 99/14628 A1 divulgue une monture de lunette comportant un tenon avec une boucle ouverte clipsée élastiquement dans une gorge d'un corps d'articulation. Une branche est clipsée sur une portion de la boucle du tenon au moyen d'une butée.

Un but de l'invention est de fournir un moyen pour simplifier la réalisation des charnières des montures de lunettes à base de pièces métalliques tordues, telles que les montures filaires.

A cet effet, on prévoit, selon l'invention, une monture de lunettes comprenant au moins un tenon et une branche réalisés à partir d'au moins une pièce métallique tordue et reliés par une charnière comportant un corps d'articulation définissant un axe de pivotement. Le corps d'articulation comporte au moins deux gorges annulaires coaxiales à l'axe de pivotement et le tenon et la branche ont chacun une portion conformée en boucle ouverte pour être engagée élastiquement dans une des gorges selon une direction transversale à l'axe de pivotement de manière à assurer une retenue élastique du tenon et de la branche sur le corps d'articulation et à permettre un pivotement de la branche par rapport au tenon.

Le tenon et la branche sont clipsés sur le corps d'articulation qui les relie l'un à l'autre. La charnière est alors particulièrement simple. En outre, l'engagement latéral des boucles ouvertes sur le corps d'articulation permet d'avoir des gorges relativement profondes, ce qui améliore le guidage des boucles par rapport au corps d'articulation. L'engagement latéral permet également une meilleure maîtrise des jeux entre les boucles ouvertes et le corps d'articulation, et donc aussi des frottements entre les boucles ouvertes et le corps d'articulation.

Avantageusement, au moins l'une des boucles ouvertes a une extrémité libre recourbée pour venir en butée contre l'autre boucle ouverte et limiter une amplitude de pivotement de la branche par rapport au tenon.

L'amplitude maximale de pivotement est ainsi définie par l'extrémité formant butée en une seule pièce avec la branche ou le tenon.

De préférence alors l'extrémité libre recourbée appartient au tenon.

Ce mode de réalisation est particulièrement simple.

Avantageusement, le corps d'articulations est en matière plastique monobloc.

Le corps peut alors être réalisé par injection de matière thermoplastique dans un moule, ce qui est particulièrement simple et économique.

D'autres caractéristiques et avantages de l'invention ressortiront à la lecture de la description qui suit de modes de réalisation particuliers non limitatifs de l'invention.

Il sera fait référence aux dessins annexés, parmi lesquels :
- la figure 1 est une vue en perspective d'une paire de lunettes équipée d'une monture conforme à un premier mode de réalisation de l'invention, les branches étant dépliées,
- la figure 2 est une vue en perspective partielle de cette paire de lunettes,
- la figure 3 est une vue analogue à la figure 2 de la paire de lunettes, les branches étant repliées,
- la figure 4 est une vue analogue à la figure 2, avec un éclaté,
- les figures 5, 6 et 7 sont des vues analogues à celles des figures 2 à 4 d'une monture conforme à un deuxième mode de réalisation de l'invention,
- la figure 8 est une vue analogue à la figure 2 d'une monture conforme à un troisième mode de réalisation,
- la figure 9 est une vue en perspective d'une paire de lunettes équipée d'une monture conforme à un quatrième mode de réalisation de l'invention, les branches étant dépliées,
- la figure 10 est une vue de côté d'une branche de cette monture,
- la figure 11 est une vue de dessus d'une branche de cette monture,
- la figure 12 est une vue agrandie de la zone XII de la figure 11,
- la figure 13 est une vue de côté d'une branche d'une monture selon une variante du quatrième mode de réalisation,
- la figure 14 est une vue de dessus d'une branche de cette monture,
- la figure 15 est une vue agrandie de la zone XV de la figure 14.

En référence aux figures, la paire de lunettes comprend deux lentilles 1 pourvue d'une monture généralement désignée en 2.

La monture 2 comprend un pontet 3 reliant les lentilles 1 l'une à l'autre et portant généralement des patins d'appui sur les ailes du nez.

La monture 2 comprend également des branches 4 reliées chacune par une charnière généralement désignée en 5 à un tenon 6 fixé sur une des lentilles 1.

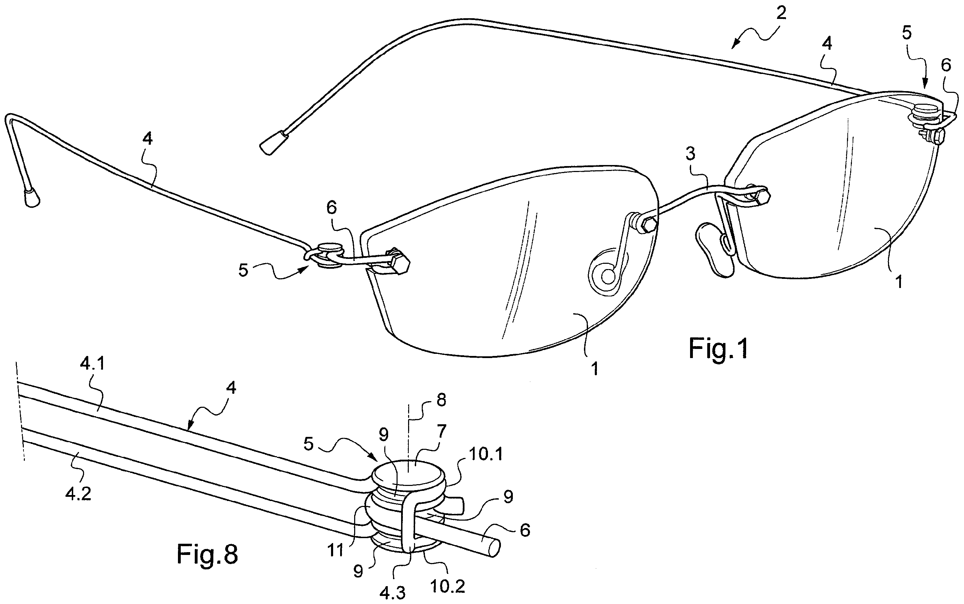

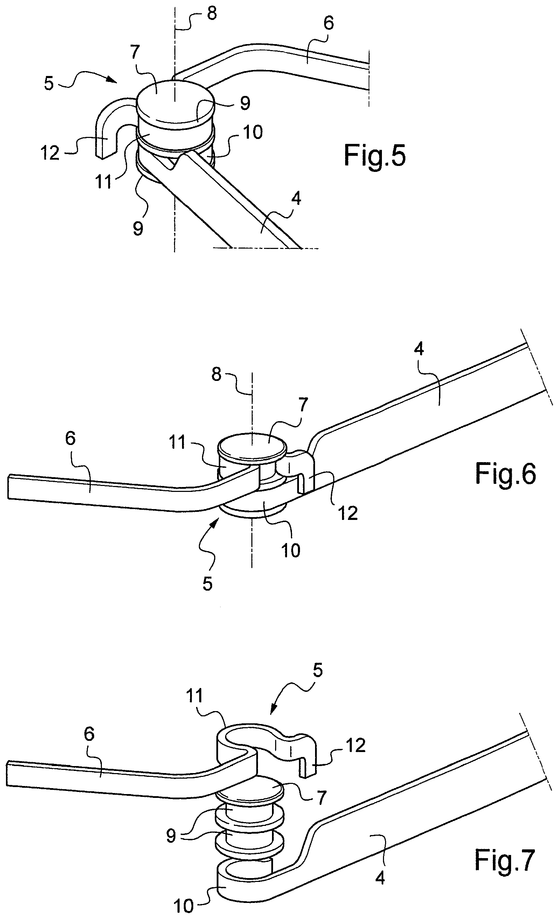

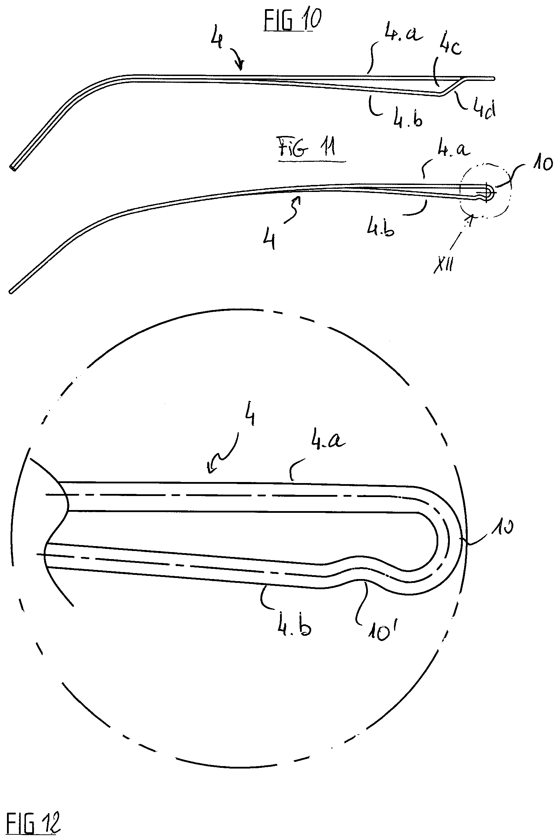

Le pontet 3, les branches 4 et les tenons 6 sont réalisés à partir de fils métalliques tordus comme dans les figures 1 à 4, 8 et 9 à 15 représentant les premier, troisième et quatrième modes de réalisation, et à partir de lames métalliques plates tordues comme dans les figures 5 à 7 représentant le deuxième mode de réalisation. Le métal utilisé est ici un β titane.

La charnière 5 comporte un corps d'articulation 7 définissant un axe de pivotement 8. Le corps d'articulation 7 comporte des gorges annulaires 9 coaxiales à l'axe de pivotement 8. Le corps d'articulation 7 est en matière plastique monobloc, par exemple en polyamide.

En référence au premier mode de réalisation des figures 1 à 4, les gorges 9 sont au nombre de deux et ont une section transversale semi-circulaire.

La branche 4 et le tenon 6 ont chacun une extrémité conformée en boucle ouverte 10, 11 respectivement. Chacune des boucles ouvertes 10, 11 est engagée élastiquement dans une des gorges 9 selon une direction transversale à l'axe de pivotement 8 de manière à assurer une retenue élastique du tenon 6 et de la branche 4 sur le corps d'articulation 5 et à permettre un pivotement de la branche 4 par rapport au tenon 6. L'ouverture des boucles ouvertes 10, 11 a une largeur inférieure au diamètre en fond de gorges 9 du corps d'articulation 5 et les boucles ouvertes 10, 11 ont un diamètre interne légèrement inférieur au diamètre en fond de gorges 9 du corps d'articulation 5 et très inférieur au diamètre externe du corps d'articulation 5. En variante, les boucles ouvertes 10, 11 ont un diamètre interne légèrement supérieur au diamètre en fond de gorges 9 du corps d'articulation 5.

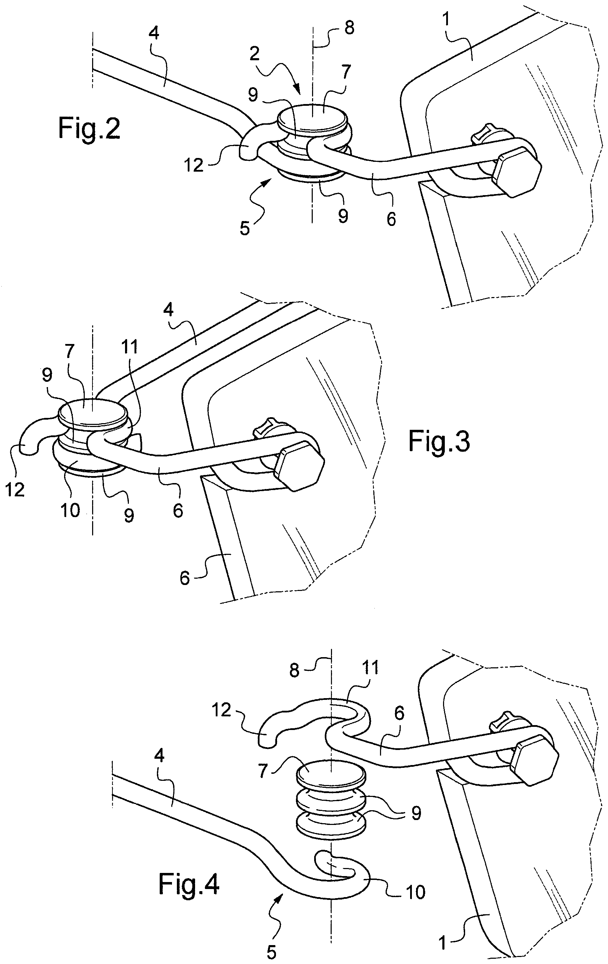

La boucle ouverte 11 a une extrémité libre recourbée 12 pour venir en butée contre l'autre boucle ouverte 10 et plus particulièrement contre la zone de raccordement d'une portion sensiblement rectiligne de la branche 4 à la boucle ouverte 10 (voir la figure 2). Cette mise en butée permet de limiter une amplitude de pivotement de la branche 4 par rapport au tenon 6. On notera que le plan de la boucle ouverte 10 est décalé par rapport à un plan contenant les branches 4 de telle manière que chaque branche 4 dépliée se trouve dans le prolongement du tenon 6 auquel elle est reliée.

En référence au deuxième mode de réalisation des figures 5 à 7, les gorges 9 du corps d'articulation 5 sont au nombre de deux et ont une section transversale rectangulaire.

Les branches 4 et les tenons 6 ont la même géométrie que dans le mode de réalisation précédent mais sont constitués de lames métalliques plates tordues, de section rectangulaire, au lieu de fils de section circulaire.

A la figure 8 est représentée une monture conforme à un troisième mode de réalisation dans lequel les branches 4 sont des branches doubles réalisées chacune au moyen d'une tige métallique tordue de telle manière que chaque branche 4 comprenne deux tronçons longitudinaux 4.1, 4.2 ayant des extrémités conformées en boucles ouvertes 10.1, 10.2 et reliées l'une à l'autre par un tronçon transversal 4.3 et des extrémités opposées réunies par un manchon, non visible sur la figure, de contact avec la tête du porteur.

Le tenon 6 possède une extrémité, non visible, de liaison à la lentille et une extrémité opposée conformée en boucle ouverte 11.

Le corps d'articulation 5 comporte trois gorges 9, à savoir une gorge centrale pour recevoir la boucle 11 et deux gorges extérieures pour recevoir chacune une boucle 10.

On notera que le tronçon transversal 4.3 de la branche 4 en position ouverte vient en butée contre le tenon 6 pour limiter l'ouverture de ladite branche.

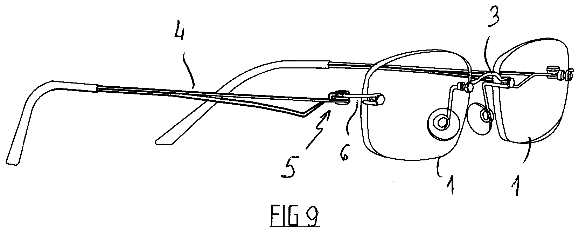

En référence aux figures 9 à 12, et conformément au quatrième mode de réalisation, le fil métallique constituant la pièce métallique tordue formant chaque branche 4 comprend deux tronçons 4a, 4b. Les tronçons 4a, 4b s'étendent de part et d'autre d'une portion intermédiaire formant la boucle ouverte 10. Les tronçons 4a, 4b sont adjacents l'un à l'autre et s'étendent en regard l'un de l'autre en définissant entre eux un passage 4c permettant l'introduction entre les tronçons 4a, 4b du corps d'articulation 5 parallèlement à son axe central. Le passage 4c est agencé de telle manière que la boucle ouverte 10 s'ouvre latéralement dans le passage 4c par une ouverture de largeur inférieure au diamètre en fond de gorges 9 du corps d'articulation 5.

Les tronçons 4a et 4b divergent l'un de l'autre depuis l'extrémité auriculaire de la branche vers la boucle ouverte 10. Le tronçon 4b s'étend sous le tronçon 4a, qui lui est rectiligne, et se raccorde à la boucle ouverte 10 par une portion de raccordement 4d sensiblement en forme de S. Ceci permet d'offrir un passage 4c de dimensions importantes permettant une introduction aisée du corps d'articulation 5. La portion de raccordement 4d est reliée à la boucle ouverte 10 en formant un angle 10' qui est orienté vers l'extrémité du tronçon 4a en regard pour définir avec cette dernière l'ouverture de la boucle ouverte 10.

Ainsi, une fois que le corps d'articulation 5 a été introduit dans le passage 4c, le corps d'articulation 5 peut être engagé latéralement dans la boucle ouverte 10 de telle manière que la boucle ouverte 10 soit reçue dans une des gorges 9.

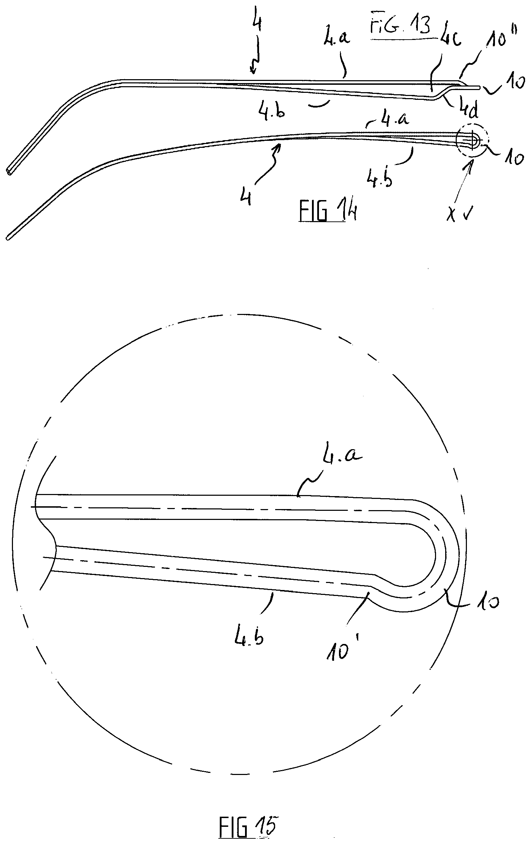

Dans la variante des figures 13 à 15, les tronçons 4a, 4b sont divergents par rapport à un plan de la boucle ouverte 10 normal à l'axe central de ladite boucle ouverte 10. Le tronçon 4a se raccorde à la boucle ouverte 10 en formant un angle 10" orienté à l'opposé du tronçon 4b. L'angle 10" peut servir de butée au pivotement de la branche 4 pour définir, en venant en appui du tenon 6, la position fermée de la branche 4 (lorsque celle-ci s'étend parallèlement aux lentilles).

Bien entendu, l'invention n'est pas limitée aux modes de réalisation décrits mais englobe toute variante entrant dans le champ de l'invention telle que définie par les revendications.

En particulier, la structure de la monture peut être différente de celle décrite : le corps d'articulation peut par exemple être en au moins deux parties assemblées l'une avec l'autre.

Les branches, les tenons et le pontet peuvent avoir une autre forme que celles représentées. En particulier les branches 4 peuvent ne pas être rectiligne et présenter par exemple une forme ondulée. Les boucles ouvertes des branches peuvent également s'étendre dans le plan contenant les branches ou dans un plan décalé par rapport aux branches.

La boucle ouverte de la branche et la boucle ouverte du tenon peuvent être toutes deux reçues à pivotement sur le corps d'articulation, ou seulement l'une des deux boucles ouvertes.

En variante, le métal utilisé peut être l'acier inoxydable ou tout autre métal ou matériau adapté à la confection d'une monture.

Le corps d'articulation peut être en matière plastique ou élastomérique, en métal, en bois ou en toute autre matière.

L'extrémité libre recourbée de la boucle ouverte formant butée peut appartenir au tenon ou à la branche, la branche et le tenon peuvent être pourvus d'une butée ou la monture peut ne pas comprendre de butée du tout. La butée peut en outre être solidaire d'une autre partie de la branche ou du tenon et se projeter au-delà de la boucle ouverte.

## Revendications

1. Monture de lunette comprenant au moins un tenon (6) et une branche (4) réalisés à partir d'au moins une pièce métallique tordue et reliés par une charnière (5) comportant un corps d'articulation (7) définissant un axe de pivotement (8), le corps d'articulation comportant au moins deux gorges annulaires (9) coaxiales à l'axe de pivotement (8) et la branche ayant une portion conformée en boucle ouverte (10), **caractérisée en ce que** le tenon a une portion conformée en boucle ouverte (11) et en ce chaque portion conformée en boucle ouverte (10, 11) peut être clipsée élastiquement dans une des gorges (9) selon une direction transversale à l'axe de pivotement de manière à assurer une retenue élastique du tenon et de la branche sur le corps d'articulation et à permettre un pivotement de la branche par rapport au tenon.

2. Monture selon la revendication 1, dans laquelle au moins l'une des boucles ouvertes (11) a une portion recourbée (12) pour venir en butée contre une portion de l'autre boucle (10) et limiter une amplitude de pivotement de la branche par rapport au tenon (6).

3. Monture selon la revendication 2, dans laquelle la portion recourbée (12) est une extrémité libre de la boucle ouverte (11) appartenant au tenon (6).

4. Monture selon la revendication 1, dans laquelle la pièce métallique tordue formant la branche (4) comprend deux tronçons (4a, 4b) qui s'étendent de part et d'autre d'une portion intermédiaire formant la boucle ouverte (10) dans un plan perpendiculaire à l'axe de pivotement (8) et qui s'étendent en regard l'un de l'autre en définissant entre eux un passage (4c) permettant l'introduction entre les tronçon (4a, 4b) du corps d'articulation (7) parallèlement à l'axe de pivotement (8), la boucle ouverte s'ouvrant latéralement dans le passage.

5. Monture selon la revendication 4, dans laquelle l'un des tronçons (4b) s'étend sous l'autre des tronçons (4a) et se raccorde à la boucle ouverte (10) par une portion de raccordement (4d) sensiblement en forme de S.

6. Monture selon la revendication 1, dans laquelle chaque branche (4) comprend deux tronçons longitudinaux (4.1, 4.2) ayant des extrémités conformées en boucles ouvertes et reliées l'une à l'autre par un tronçon transversal (4.3) et le corps d'articulation (7) comporte trois gorges (9), à savoir une gorge centrale pour recevoir la boucle du tenon et deux gorges extérieures pour recevoir chacune une des boucles de la branche.

7. Monture selon la revendication 6, dans laquelle le tronçon transversal (4.3) de la branche en position ouverte vient en butée contre le tenon (6) pour limiter l'ouverture de ladite branche.

8. Monture selon la revendication 1, dans laquelle le corps d'articulation (7) est en matière plastique monobloc.

9. Monture selon la revendication 1, dans laquelle la branche (4) et le tenon (6) sont en titane.

10. Monture selon la revendication 1, dans laquelle la branche (4) et le tenon (6) sont en acier.

## Patentansprüche

1. Brillengestell, umfassend mindestens einen Zapfen (6) und einen Bügel (4), die aus mindestens einem verbogenen Metallteil hergestellt und über ein Scharnier (5) verbunden sind, das einen Gelenkverbindungskörper (7) umfasst, der eine Schwenkachse (8) definiert, wobei der Gelenkverbindungskörper mindestens zwei ringförmige Nuten (9) umfasst, die koaxial zur Schwenkachse (8) sind, und der Bügel einen Abschnitt hat, der zu einer offenen Schleife (10) geformt ist, **dadurch gekennzeichnet, dass** der Zapfen einen zu einer offenen Schleife (11) geformten Abschnitt hat und dass jeder zu einer offenen Schleife (10, 11) geformte Abschnitt elastisch in eine der Nuten (9) gemäß einer Querrichtung zur Schwenkachse eingeklipst werden kann, um ein elastisches Halten des Zapfens und des Bügels an dem Gelenkverbindungskörper sicherzustellen und ein Verschwenken des Bügels in Bezug auf den Zapfen zu ermöglichen.

2. Gestell nach Anspruch 1, bei dem mindestens eine der offenen Schleifen (11) einen umgebogenen Abschnitt (12) hat, um an einem Abschnitt der anderen Schleife (10) zur Anlage zu kommen und eine Schwenkamplitude des Bügels in Bezug auf den Zapfen (6) zu begrenzen.

3. Gestell nach Anspruch 2, bei dem der umgebogene Abschnitt (12) ein freies Ende der offenen Schleife (11) ist, die zu dem Zapfen (6) gehört.

4. Gestell nach Anspruch 1, bei dem das verbogene Metallteil, das den Bügel (4) bildet, zwei Abschnitte (4a, 4b) umfasst, die sich zu beiden Seiten eines die offene Schleife (10) bildenden Zwischenabschnitts in einer Ebene senkrecht zur Schwenkachse (8) erstrecken und die sich einander gegenüber erstrecken und dabei zwischen sich einen Durchgang (4c) definieren, der das Einführen des Gelenkverbindungskörpers (7) parallel zur Schwenkachse (8) zwischen den Abschnitten (4a, 4b) ermöglicht, wobei sich die offene Schleife seitlich in den Durchgang öffnet.

5. Gestell nach Anspruch 4, bei dem sich einer der Abschnitte (4b) unter dem anderen der Abschnitte (4a) erstreckt und sich über einen Verbindungsabschnitt (4d), der im Wesentlichen S-förmig ist, an die offene Schleife (10) anschließt.

6. Gestell nach Anspruch 1, bei dem jeder Bügel (4) zwei Längsabschnitte (4.1, 4.2) umfasst, die Enden haben, die zu offenen Schleifen geformt und miteinander über einen Querabschnitt (4.3) verbunden sind, und der Gelenkverbindungskörper (7) drei Nuten (9) umfasst, nämlich eine zentrale Nut zur Aufnahme der Schleife des Zapfens und zwei äußere Nuten zur jeweiligen Aufnahme einer der Schleifen des Bügels.

7. Gestell nach Anspruch 6, bei dem der Querabschnitt (4.3) des Bügels in offener Position in Anlage an dem Zapfen (6) kommt, um das Öffnen des genannten Bügels zu begrenzen.

8. Gestell nach Anspruch 1, bei dem der Gelenkverbindungskörper (7) aus einteiligem Kunststoff besteht.

9. Gestell nach Anspruch 1, bei dem der Bügel (4) und der Zapfen (6) aus Titan sind.

10. Gestell nach Anspruch 1, bei dem der Bügel (4) und der Zapfen (6) aus Stahl sind.

## Claims

1. A spectacle frame comprising at least one pin (6) and a branch (4) made from at least one bent metal part and connected by a hinge (5) including a joint body (7) defining a pivot axis (8), the joint body comprising at least two annular grooves (9) coaxial with the pivot axis (8) and the branch having a portion shaped as an open loop (10), **characterised in that** the pin has a portion shaped as an open loop (11) and **in that** each portion shaped as an open loop (10, 11) can be resiliently clipped into one of the grooves (9) in a direction transverse to the pivot axis so as to ensure resilient retention of the pin and the branch on the joint body and to allow pivoting of the branch relative to the pin.

2. The frame according to claim 1, wherein at least one of the open loops (11) has a curved portion (12) for abutting against a portion of the other loop (10) and limiting a pivoting amplitude of the branch relative to the pin (6).

3. The frame according to claim 2, wherein the curved portion (12) is a free end of the open loop (11) belonging to the pin (6).

4. The frame according to claim 1, wherein the bent metal part forming the branch (4) comprises two sections (4a, 4b) which extend on either side of an intermediate portion forming the open loops (10) in a plane perpendicular to the pivot axis (8) and which extend facing each other defining between them a passage (4c) allowing the introduction between the sections (4a, 4b) of the joint body (7) parallel to the pivot axis (8), the open loops opening laterally in the passage.

5. The frame according to claim 4, wherein one of the sections (4b) extends under the other of the sections (4a) and is connected to the open loop (10) by a substantially S-shaped connecting portion (4d).

6. The frame according to claim 1, wherein each branch (4) comprises two longitudinal sections (4.1, 4.2) having ends shaped as open loops and connected to each other by a transverse section (4.3) and the joint body (7) comprising three grooves (9), namely a central groove for receiving the buckle of the pin and two outer grooves for each receiving one of the loops of the branch.

7. The frame according to claim 6, wherein the transverse segment (4.3) of the branch in the open position abuts against the pin (6) to limit the opening of said branch.

8. The frame according to claim 1, wherein the joint body (7) is made of one-piece plastic material.

9. The frame according to claim 1, wherein the branch (4) and the pin (6) are made of titanium.

10. The frame according to claim 1, wherein the branch (4) and the pin (6) are made of steel.
